# EUROPEAN PATENT SPECIFICATION

(11) **EP 0 673 282 B1**
(45) Date of publication and mention of the grant of the patent: **29.12.1997**
(21) Application number: 94928416.0
(22) Date of filing: 07.10.1994
(51) Int. Cl.: B01J 23/63, B01D 53/94

(54) **CATALYST FOR THE PURIFICATION OF DIESEL ENGINE EXHAUST GASES**
KATALYSATOR FÜR DIE REINIGUNG VON DIESELMOTORABGASEN
CATALYSEUR POUR LA PURIFICATION DES GAZ D'ECHAPPEMENT DE MOTEURS DIESEL

(30) Priority: 08.10.1993 FI 934430
(43) Date of publication of application: 27.09.1995
(73) Proprietor: KEMIRA OY, SF-02271 Espoo (FI)
(72) Inventor: HÄRKÖNEN, Matti, FIN-90570 Oulu (FI); KIVIOJA, Matti, FIN-90540 Oulu (FI); MAUNULA, Teuvo, FIN-90650 Oulu (FI); SLOTTE, Thomas, FIN-90550 Oulu (FI)
(74) Representative: Sexton, Jane Helen
(86) International application number: FI9400451
(87) International publication number: WO9510356

(56) References cited:
- EP-A- 0 142 859
- EP-A- 0 397 411
- EP-A- 0 541 271
- WO-A-93/10885

## Description

The present invention relates to a catalyst intended for the purification of carbon monoxide and hydrocarbon gases present in the exhaust gases of a diesel engine or some other lean-mixture engine, by converting them into less harmful carbon dioxide and water while minimizing the oxidation of the sulfur dioxide originating from the fuel.

The structure of prior-art catalysts intended for the purification of diesel engine exhaust gases is typically such that the body, which may be metallic or ceramic, has a large quantity of parallel holes or conduits through which the gas to be purified flows. The said holes form a pipe system which is coated with a support (i.e. washcoat) having a large specific surface area, for example alumina. Catalytically active substances, such as noble metals, are adsorbed to the surface of pores in the support. After calcination and/or reduction they crystallize into very small particles which serve as sites in which specific catalytic reactions are promoted. These active particles are either in metallic or oxidic form.

Diesel engine exhaust gases are characterized by a high oxygen concentration, which is approx. 2-20 % depending on the running conditions of the engine. It can be pointed out for comparison that in the exhaust gases of a gasoline engine the aim is a stoichiometric oxygen concentration, which is approx. 0.5-0.8 % depending on the running conditions. Stoichiometric oxygen concentration means the oxygen amount which is consumed in the oxidation reactions of the carbon monoxide and hydrocarbons present in the exhaust gas. Typical temperatures in diesel engine exhaust gas is 150-250 °C and in gasoline engine exhaust gas 350-600 °C.

In addition, diesel engine exhaust gas typically contains clearly measurable amounts of sulfur dioxide in general less than 50 ppm SO₂ when low-sulfur fuel is used and over 50 ppm, even up to 100 ppm when high-sulfur fuel is used. The sulfur dioxide content in gasoline engine exhaust gas is very low, less than 2 ppm.

In the purification of diesel engine exhaust gases, the most essential gas components are carbon monoxide and hydrocarbons. For particulate emissions there are norms, but as engine technology advances the quantity of soot particles can be decreased already in the engine. Therefore, the significance of the catalyst in reducing particulate emissions will be decreased. The soot accumulated in the catalyst will burn if the temperature is sufficiently high, in general above 550 °C. The trend in diesel engine technology is to reduce the temperature of the exhaust gas to below 200 °C, at which temperature the burning of soot is no longer possible. In oxidation catalysts it is possible to remove volatile hydrocarbons adsorbed to the surface of solid soot and thereby remove up to 30-40 % of the mass of particles even at temperatures below 550 °C.

Sulfur dioxide present in exhaust gas will not harm the catalyst, unless it oxidizes to sulfur trioxide. If this happens, the consequence will be its conversion in the presence of moisture to sulfuric acid, and further a reaction with cationic impurities, e.g. from oil, to solid dust-like sulfate, which, like soot, tends to clog the small pores of the surface structure of the catalyst. This weakens the activity of the catalyst. Thus it is preferable to affect the catalyst so that the oxidation of sulfur dioxide is minimal.

Owing to the high oxygen concentration it is in general not possible without the addition of reducing agents to reduce nitrogen oxides present in diesel exhaust gas catalytically to elemental nitrogen, as occurs in the catalyst of a gasoline engine.

Purification of diesel engine exhaust gases has been described in numerous patents and other publications. Some of the most typical applications are discussed below.

German patent publication DE 39 40 758 A1 describes a catalyst intended for the purification of diesel exhaust gas, wherein the porous support having a large surface area consists of alumina, titania, silica or zeolite, the active ingredients on the surface of the support being Pt, Pd, Rh and/or Ir and vanadium oxide. The adding of vanadium promotes the combustion of soot and decreases the oxidation of sulfur dioxide, but at the same time increases the light-off temperatures of carbon monoxide and hydrocarbon gases. Light-off temperatures of 220-250 °C are suggested for the catalyst according to this publication; this is not sufficient in the latest diesel engine models. The light-off temperature of a gas means the temperature at which a 50 % gas conversion is obtained.

Japanese patent publication JP 04267928 discloses a two-part catalyst for purifying diesel engine exhaust gas. In the first part, the support is active alumina or zeolite and, in the latter part, the support is titania, silica, zirconia and/or calcium oxide. The noble metal is an "oxidation catalyst".

Patent publication US 5 114 901 discloses a catalyst for purifying diesel engine exhaust gas, wherein the support is silica and the noble metal is platinum, palladium or equivalent. It is emphasized that it is important to the performance of the catalyst that it has only a slightly oxidizing effect on sulfur dioxide. A high light-off temperature was mentioned as one disadvantage of such a catalyst.

M. Skoglund et al. investigated (Catalysis Letters 13, 1992, 27-38 and Applied Catalysis, 77, 1991, 9-20) catalysts having alumina as the support and platinum and palladium together, at a number of different ratios, as the noble metals. The catalysts were heat treated at 550 °C for 2 h and were thereafter created hydrothermally (100 % water vapor) at 814 °C for 2 h, whereafter the activity of the catalyst was at its maximum. As a reason for this it was proposed that very small pores were formed in the surface of the alumina in the above-mentioned treatment. The performance of the catalyst was investigated in laboratory conditions with pure test gases: xylene, propylene and carbon monoxide. The effect of sulfur dioxide and soot dust was not investigated. The best light-off temperature of 200°C was obtained with a Pt:Pd ratio of 1:1 for both carbon monoxide and propylene.

S. Subramian et al. investigated (Catalysis Letters 16, 1992, 323-334) the catalytic action of palladium on the reaction of lanthanum oxide and α-form alumina to lanthanum aluminate (LaAlO₃). It was noted that the oxidizing effect of such a Pd/lanthanum aluminate catalyst on the oxidation of NO gas to NO₂ was greater than that of a Pd/alumina catalyst. In a diesel engine catalyst this is detrimental, since, in the presence of moisture, NO₂ forms nitric acid.

It is evident from the above examples that purification of all diesel engine exhaust gas components is difficult. Purification in several steps is advantageous in terms of performance efficiency, but such a structure is more expensive than the structure for purification in one step.

With an alumina support, low light-off temperatures are achieved when there is a sufficient amount of an oxidizing noble metal (e.g. platinum or palladium) present. The disadvantage is, however, that such a catalyst rapidly loses its efficiency owing to the clogging of pores by the forming sulfate dust, and the number of outcoming solid particles increases. This problem has been avoided by using as the support, for example, silica or titania, to which the adsorption of sulfur dioxide is much lower than to alumina. Thus oxidation to sulfur trioxide is also much less. Since the principal component of the support is silica or titania, the light-off temperatures of the desired reactions are in general higher than with a corresponding alumina-based catalyst. If the temperature of exhaust gas is below this light-off temperature, the catalyst cannot function well.

The disadvantage with the prior-art diesel catalysts described above, is either the complicated structure or the high light-off temperatures of the desired reactions or the rapid deterioration of their performance.

The object of the present invention is to provide a catalyst for diesel exhaust gases in which the oxidation of carbon monoxide and hydrocarbon gases is complete and occurs at a lowest possible temperature. On the other hand, the aim is to minimize the oxidation of sulfur dioxide at the operating temperature. These objects can be achieved by the catalyst according to the invention, the main characteristics of which are given in accompanying Claim 1.

While testing various catalysts it was surprisingly observed that when both platinum and palladium simultaneously were used as noble metals in a lanthanum-containing alumina-based catalyst, the light-off temperatures dropped significantly, as is evident from the examples presented below. When the catalyst is capable of functioning at temperatures at which binding of sulfur does not occur, the performance of the catalyst remains efficient for a long time. Instead, with lanthanum-containing Pd/alumina catalysts and with Pt/alumina catalysts the light-off temperatures were clearly above 200 °C, which is too high for certain diesel applications.

The body of a catalyst according to the invention may be a metallic or ceramic honeycomb.

The support with a large surface area on the surface of the body is preferably a mixture of gamma-alumina and lanthanum oxide.

The specific surface area of the alumina used in the support is preferably 100-400 m²/g.

The amount of lanthanum oxide in the support is preferably 0.1-30 % by weight, most preferably 1-15 % by weight, calculated from the total amount of the support.

The amount of platinum in the catalyst is preferably 0.01-5 g per one litre of honeycomb (g/l), most preferably 0.5-2 g/l, and the amount of palladium in the catalyst is preferably 0.01-15 g/l, most preferably 1-4 g/l.

The formation of particles and their adhering to the catalyst surface can be affected by the geometric dimensioning of the parallel conduits in the catalyst. The combustion of soot at the target temperature is not possible according to present-day knowledge. The amount of soot formed in the engine can also be affected by means of engine structure. The amount of sulfur dioxide formed in the engine may also be decreased by lowering the sulfur concentration in the fuel used.

The result of the invention is a diesel catalyst which purifies carbon monoxide and hydrocarbon gases more efficiently than conventional catalysts, and which in suitable engines, in which the concentrations of soot and sulfur dioxide are moderate, is capable of long-term service.

The details of the invention are given in the following examples, the test results of which are compiled in Table 1. In all of the catalysts, the alumina is in the gamma form, and its specific surface area is 200-300 m²/g.

### Example 1 (Catalyst according to the invention)

The preparation of the catalyst was started with the preparation of a washcoat slurry. The following raw materials were weighed:

| | |
|---|---|
| - Al-hydrate slurry (dry solids content 31 %) | 43.0 g |
| - gamma-alumina | 52.0 g |
| - La-nitrate solution (400 g La/l) | 11.6 g |

These were slurried in water so that the dry solids content of the slurry was 40.0 %, and were ground in a ball mill for 4 hours. Metal foils, both smooth and corrugated, were coated on both sides with this slurry and were calcined at 550 °C for 4 hours. The amount of the washcoat in the catalyst was 42 g/m².

The strips were immersed in a Pt salt solution. The Pt concentration and amount of the solution had been adjusted so that, after the immersion, there remained 0.23 % Pt on the strips calculated from the dry weight of the catalyst. The platinum was reduced at 300 °C. Next, impregnation in a Pd salt solution was carried out so that the Pd content of the strips was 0.23 %. Finally the palladium was reduced at 400 °C. Thereafter a smooth and corrugated strip, one on top of the other, were rolled to form a honeycomb, in which the number of holes was 400 per square inch. In this honeycomb, with the given amount of washcoat, the noble metal concentration of 0.23 % corresponds to 1.77 g of Pt in a honeycomb with a volume of 1 l.

The catalyst support of Example 1 contained alumina and lanthanum oxide (4 % La), their total amount in the catalyst being 42 g/m². The noble metals were platinum 1.77 g/l and palladium 1.77 g/l.

The following reference catalysts were prepared in a corresponding manner.

### Example 2 (reference)

Catalyst support was alumina in an amount of 44 g/m².
Noble metal was platinum in an amount of 1.35 g/l.

### Example 3 (reference)

Catalyst support was alumina in an amount of 44 g/m².
Noble metal was platinum in an amount of 2.10 g/l.

### Example 4 (reference)

Catalyst support was alumina in an amount of 44 g/m².
Noble metals were platinum in an amount of 1.09 g/l and palladium in an amount of 2.15 g/l.

### Example 5 (reference)

Catalyst support was alumina and lanthanum oxide (4 % La) the total amount being 42 g/m².
Noble metal was platinum in an amount of 1.77 g/l.

### Example 6 (reference)

Catalyst support was alumina and lanthanum oxide (4 % La) the total amount being 42 g/m².
Noble metal was palladium in an amount of 5.31 g/l.

The above-mentioned catalysts were tested in a test gas which contained propylene 0.05 %, carbon monoxide 0.05 %, carbon dioxide 10.0 %, nitrogen oxide (NO) 0.10 %, oxygen 15 %, water vapor 7.0 %, sulfur dioxide 25 ppm, the balance being nitrogen. The testing was carried out in a laboratory under constant conditions, the test piece was cylindrical, diameter 14 mm and length 75 mm. The space velocity of the gas in the catalyst was 50,000/h.

The light-off temperature and conversion results obtained in the test are presented in the following table.

**Table 1**

| Results of laboratory testing. | | | | | | | | |
|---|---|---|---|---|---|---|---|---|
| Example | Catalyst | | | | Light-off | | Conversion at 400°C | |
| | Al oxide | La oxide | Pt g/l | Pd g/l | CO | HC | CO | HC |
| 1 | x | x | 1.77 | 1.77 | 140°C | 185°C | 95% | 99% |
| 2 | x | - | 1.35 | - | 215 | 230 | 96 | 100 |
| 3 | x | - | 2.10 | - | 207 | 222 | 95 | 98 |
| 4 | x | - | 1.09 | 2.15 | 176 | 187 | 95 | 99 |
| 5 | x | x | 1.77 | - | 201 | 224 | 96 | 100 |
| 6 | x | x | - | 5.31 | 270 | 263 | 94 | 98 |

It is observed that the catalyst no. 1 according to the invention shows the best performance in terms of light-off temperature. This catalyst is a better oxidizer of carbon monoxide and hydrocarbon gases than the reference catalysts. The support is a mixture of alumina and lanthanum oxide, which components may form at least in part lanthanum aluminate, and the catalytically active substance is a mixture of platinum and palladium.

The efficiency of the catalyst according to the invention is based partly on the mixture of lanthanum oxide and alumina in the support and partly on the joint effect of the noble metals platinum + palladium, a result which is especially surprising in the test conditions. In general the oxidizing catalysts platinum and palladium have been used separately, since their joint effect has been lower than the effect of either one of them separately. In the catalyst according to the invention, the noble metals are probably distributed at least in part so that the platinum is in close contact with the alumina and the palladium is in close contact with the lanthanum oxide. Such a model may explain why the combination catalyst according to the invention is better than the said noble metals alone on one and the same support.

In addition, the superiority of the catalyst according to the invention is affected by the fact that, as the operating temperature remains low (below 200 °C), the oxidation of sulfur dioxide to sulfur trioxide cannot yet occur at so low a temperature, even if catalytic activity favoring such oxidation were present. The reason for this is the fact, derived from thermodynamics and reaction kinetics, that the said oxidation occurs within the temperature range 300-500 °C, and this range is further raised by the addition of lanthanum. At a temperature above 500 °C, the thermodynamic equilibrium is again on the side of sulfur dioxide.

## Claims

1. A catalyst for the purification of sulfur dioxide containing exhaust gases from a lean-mixture engine such as a diesel engine which catalyst comprises a body having numerous through-flow conduits for the exhaust gas, a support having a large surface area on the surface of the body, and catalytically active substances on the surface of the support, wherein the support comprises a mixture of alumina and lanthanum oxide and the catalytically active substances comprise both platinum and palladium.

2. A catalyst according to claim 1, wherein the support is a mixture of gamma-alumina and lanthanum oxide.

3. A catalyst according to claim 1 or 2, wherein the specific surface area of the alumina serving as support is 100-400m²/g.

4. A catalyst according to any one of claims 1 to 3, wherein the amount of lanthanum oxide serving as support is 0.1-30 % by weight based on the total weight of the support.

5. A catalyst according to claim 4, wherein the amount of lanthanum oxide is 1-15 % by weight based on the total weight of the support.

6. A catalyst according to any one of claims 1 to 5, wherein the amount of platinum in the catalyst is 0.01-5 g/l.

7. A catalyst according to claim 6, wherein the amount of platinum in the catalyst is 0.5-2g/l.

8. A catalyst according to any one of claims 1 to 7, wherein the amount of palladium in the catalyst is 0.01-15 g/l.

9. A catalyst according to claim 8, wherein the amount of palladium in the catalyst is 1-4 g/l.

10. Use of a catalyst as defined in any one of claims 1 to 9 for the purification of sulfur dioxide containing exhaust gases from a lean-mixture engine such as diesel engine.

## Patentansprüche

1. Katalysator zur Reinigung von Schwefeldioxid enthaltenden Abgasen eines Motors, der mit einem mageren Gemisch arbeitet, beispielsweise eines Dieselmotors, wobei der Katalysator einen Körper mit zahlreichen Durchflußkanälen für das Abgas aufweist und ein Träger mit einem großen Oberflächenbereich auf der Oberfläche des Körpers angeordnet ist, während der Träger katalytisch aktive Substanzen auf seiner Oberfläche trägt, wobei der Träger aus einer Mischung von Aluminiumoxid und Lanthanoxid besteht und die katalytisch aktiven Substanzen sowohl Platin als auch Palladium aufweisen.

2. Katalysator nach Anspruch 1, bei welchem der Träger aus einer Mischung von Gamma-Aluminiumoxid und Lanthanoxid besteht.

3. Katalysator nach den Ansprüchen 1 oder 2, bei welchem der spezielle Oberflächenbereich des als Träger dienenden Aluminiumoxids zwischen 100 und 400 m²/g liegt.

4. Katalysator nach einem der Ansprüche 1 bis 3, bei welchem der Anteil von Lanthanoxid, der als Träger wirkt, 0,1 bis 30 Gew.-% aufweist, basierend auf dem Gesamtgewicht des Trägers.

5. Katalysator nach Anspruch 4, bei welchem die Menge des Lanthanoxids zwischen 1 und 15 Gew.-% liegt, basierend auf dem Gesamtgewicht des Trägers.

6. Katalysator nach einem der Ansprüche 1 bis 5, bei welchem die Menge von Platin im Katalysator zwischen 0,01 und 5 g/l beträgt.

7. Katalysator nach Anspruch 6, bei welchem die Menge von Platin im Katalysator zwischen 0,5 und 2 g/l liegt.

8. Katalysator nach einem der Ansprüche 1 bis 7, bei welchem die Menge von Palladium im Katalysator zwischen 0,01 und 15 g/l beträgt.

9. Katalysator nach Anspruch 8, bei welchem die Menge von Palladium im Katalysator zwischen 1 und 4 g/l liegt.

10. Benutzung eines Katalysators gemäß einem der Ansprüche 1 bis 9 zur Reinigung von Schwefeldioxid enthaltenden Abgasen eines mit einem mageren Gemisch arbeitenden Motors, beispielsweise eines Dieselmotors.

## Revendications

1. Un catalyseur pour l'épuration de gaz d'échappement contenant du dioxyde de soufre et provenant d'un moteur à mélange pauvre tel qu'un moteur diesel, lequel catalyseur comprend un corps comportant de nombreux conduits traversants pour le passage du gaz d'échappement, un support ayant une grande surface spécifique sur la surface du corps, et des substances à activité catalytique sur la surface du support, dans lequel le support comprend un mélange d'alumine et d'oxyde de lanthane et les substances à activité catalytique comprennent à la fois du platine et du palladium.

2. Un catalyseur selon la revendication 1, dans lequel le support est un mélange d'alumine γ et d'oxyde de lanthane.

3. Un catalyseur selon la revendication 1 ou 2, dans lequel la surface spécifique de l'alumine servant de support est comprise entre 100 et 400 m²/g.

4. Un catalyseur selon l'une quelconque des revendications 1 à 3, dans lequel la quantité d'oxyde de lanthane servant de support est comprise entre 0,1 et 30 % en poids par rapport au poids total du support.

5. Un catalyseur selon la revendication 4, dans lequel la quantité d'oxyde de lanthane est comprise entre 1 et 15 % en poids par rapport au poids total du support.

6. Un catalyseur selon l'une quelconque des revendications 1 à 5, dans lequel la quantité de platine dans le catalyseur est comprise entre 0,01 et 5 g/l.

7. Un catalyseur selon la revendication 6, dans lequel la quantité de platine dans le catalyseur est comprise entre 0,5 et 2 g/l.

8. Un catalyseur selon l'une quelconque des revendications 1 à 7, dans lequel la quantité de palladium dans le catalyseur est comprise entre 0,01 et 15 g/l.

9. Un catalyseur selon la revendication 8, dans lequel la quantité de palladium dans le catalyseur est comprise entre 1 et 4 g/l.

10. Utilisation du catalyseur tel que défini dans l'une quelconque des revendications 1 à 9 pour l'épuration de gaz d'échappement contenant du dioxyde de soufre et provenant d'un moteur à mélange pauvre tel qu'un moteur diesel.
